# EUROPEAN PATENT SPECIFICATION

(11) **EP 0 667 312 B1**
(45) Date of publication and mention of the grant of the patent: **21.04.1999**
(21) Application number: 95200318.4
(22) Date of filing: 09.02.1995
(51) Int. Cl.: B65H 75/44, F16K 5/04

(54) **Hose reel**
Schlauchhaspel
Dévidoir pour tuyau flexible

(30) Priority: 09.02.1994 NL 9400203
(43) Date of publication of application: 16.08.1995
(73) Proprietor: Jansen, Frank Peter, NL-9281 LN Harkema (NL)
(72) Inventor: Jansen, Frank Peter, NL-9281 LN Harkema (NL)
(74) Representative: 't Jong, Bastiaan Jacobus

(56) References cited:
- NL-A- 8 502 159
- US-A- 2 578 396

## Description

The invention relates to a hose reel, in particular for a fire-hose, in which is incorporated a valve which automatically opens the water supply as soon as the hose is unrolled and closes it again when the hose is rolled up.

Such a reel is known from the Netherlands patent application 8 502 159.

In this known hose reel a reel hub is arranged in otherwise usual manner for rotation on a fixedly disposed shaft end which is mounted for instance on a wall. The reel hub is provided with co-rotatable hose connecting means. A water supply channel extends internally through the shaft end and can be placed in connection with the hose connecting means through radial openings in the shaft end and the reel hub, so that water can flow to the hose via this water supply channel.

In the known hose reel a rotatable valve case is mounted which can close or leave open a radial opening to the hose connecting means. The respective closed and open positions are determined by stop means.

A friction coupling is arranged which is connected on one side to the valve case and on the other side to the reel hub, so that when the reel hub turns the valve case is carried along through the stroke permitted by the stop means. When the reel is rotated in the one direction, for example the direction in which the hose is unwound, the valve case is thereby turned to the open position, and when the reel is rotated in the opposite direction the valve case is turned into the closed position.

The known device is rather complicated and comprises comparatively many components. The known hose reel is thereby relatively expensive.

The invention now has for its object to provide a hose reel of the above specified type which is of simpler construction and has fewer components, while it can nevertheless function with at least the same reliability.

This object is achieved with a hose reel as characterized in claim 1. The movable parts, namely the valve case and the reel hub, are hereby combined, whereby the hose reel is greatly simplified.

The friction coupling can be embodied in very simple manner in that it engages on one side on the fixed shaft end and on the other side onto the valve case rotatable directly therearound.

A favourable embodiment of the friction coupling is herein characterized in claim 2.

The step of claim 3 achieves in favourable manner that the bias of the friction coupling and therewith the carrying friction force can be adjusted simply by tightening the axial bolt connection to a greater or lesser extent.

A further favorable embodiment is characterized in claim 4. The cam and the protrusion can hereby be arranged externally in simple manner and do not require any separate mounting operations.

In order to obtain a reliable sealing in the closed situation and therein a long-term, reliable operation of the valve means, the step of claim 5 is preferably applied. The O-ring providing the sealing remains reliably enclosed in the groove and also cannot come loose of the groove during movement past the corresponding radial opening because it remains enclosed by the remaining wall parts between the smaller openings therein.

A favourable embodiment is obtained herein with the step of claim 6 which results in minimum wear of the O-ring.

The invention is further elucidated in the following description with reference to the embodiment shown in the figures.
- Fig. 1: shows in section a hose reel according to an embodiment of the invention.
- Fig. 2: shows the hose reel of fig. 1 in a view with exploded parts.
- Fig. 3: shows a view according to arrow III in fig. 1 of the stop cams of the hose reel.
- Fig. 4: shows a view corresponding with fig. 3 in another rotational position of the stop cams.
- Fig. 5A and 5B: show the valve case in relation to the reel hub in two operating positions.
- Fig. 6: is a view according to arrow VI in fig. 5 of the hose connecting means.
- Fig. 7: is a view corresponding with fig. 6 of another embodiment.

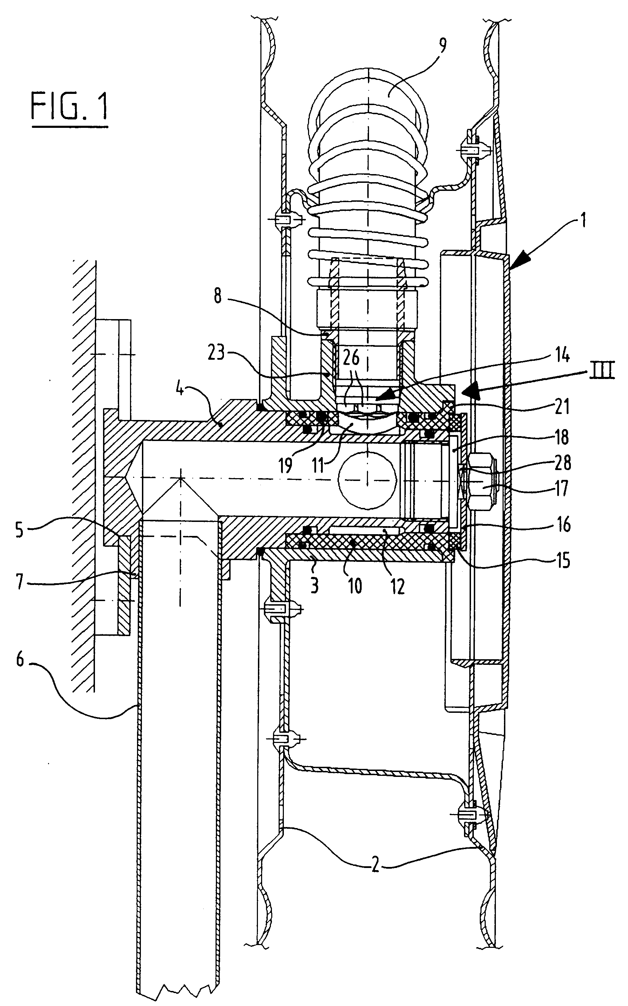

As shown in fig. 1, the reel comprises a drum 1 with side flanges 2 which is mounted on a hub 3, which is arranged rotatably on a hollow shaft end 4. The latter is provided with a suspension slot 5 for fixing of the reel in a suspension plate arranged for instance on a wall, and with a connection 7 which is connected to a water supply pipe 6. Hub 3 has a connection 23 into which is fixedly screwed a coupling piece 8 which connects onto the one end of the hose 9 wound round the reel 1, 2.

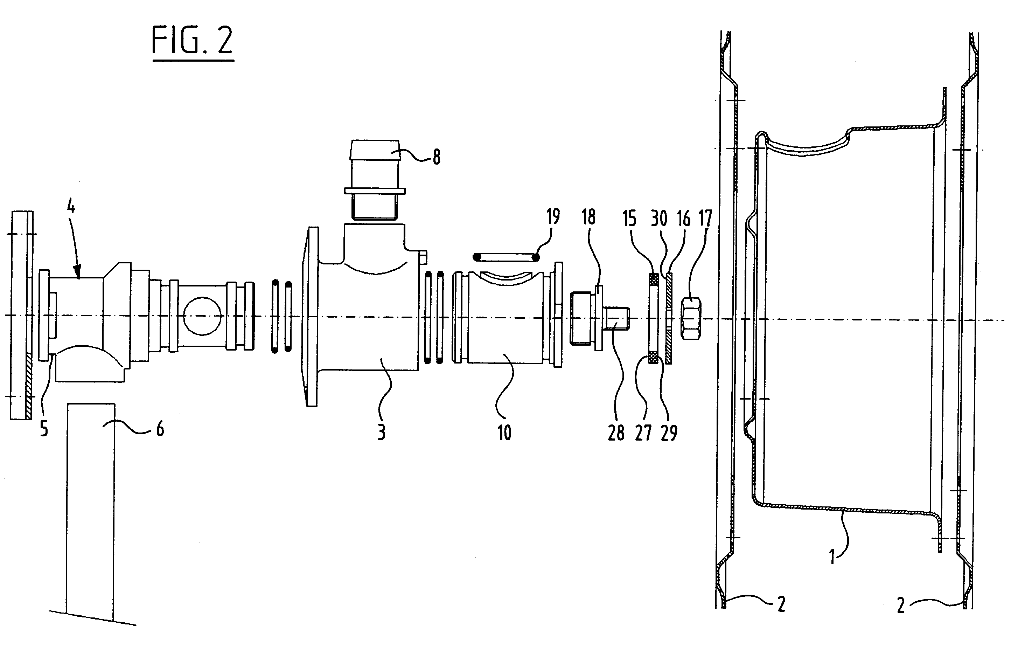

As shown in fig. 1 and 2, hub 3 is arranged rotatably round a valve case or valve member 10. Arranged in the wall of the valve member is an opening 11 which forms a connection between the central cavity of shaft end 4 and a chamber 12 which is formed in shaft end 4 so that, when the still to be described valve member is located in the open position, water can flow from supply pipe 6 into the connection 23 and therefrom into the hose 9.

Located inside the hub 3 is a rotatable valve member 10 which is formed by a case having thereon one or more cams 21 and a chamber 20 forming an annular end face. In the wall of valve member 10 is arranged an opening 11 which, in the shown position of valve member 10, coincides with openings 14, so that this shown position of valve member 10 is the open position. By rotating hub 3 through about 30° the openings 14 are placed out of coincidence with openings 11 whereby valve member 10 is situated in the closed position.

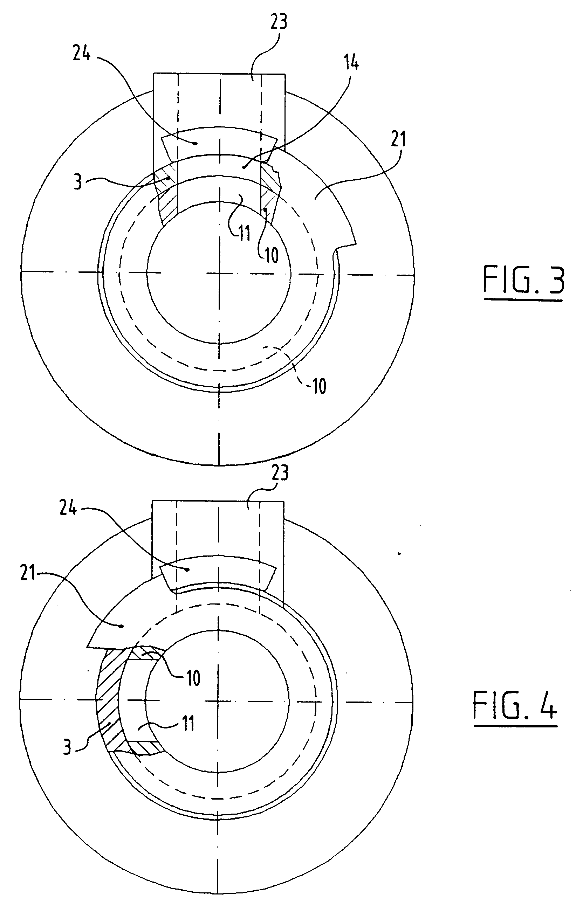

The valve member 10 is held relative to shaft end 4 by an elastic intermediate disc 15 which, under bias generated by the disc 16, is pressed against the annular end face 20. Disc 16 cannot turn tangentially relative to shaft end 4 and the disc 16 is biased by axial displacement by means of a nut 17 which is arranged on a threaded portion 28 of plug 18. The plug 18 is screwed into shaft end 4. Valve member 10 is thus held in place by friction between surfaces 27 of the intermediate disc 15 and end face 20 of valve member 10 or friction between the surfaces 29 of intermediate disc 15 and 30 of disc 16. As the hub 3 can rotate freely round valve member 10, the openings 14 of hub 3 will coincide with the opening 11 of valve member 10 after unwinding of the hose through roughly 300°, so that the member 10 is opened. At that moment, as shown in fig. 3, the cam 24 of hub 3 runs against a cam 21 of valve member 10. The valve member 10 will hereby begin to co-rotate with hub 3 round shaft end 4 and intermediate disc 15 will begin to slip against valve member 10 or disc 16.

When the hose 9 is wound up, the rotation of hub 3 is then in opposed direction, as shown in fig. 4, and hub 3 will in the first instance turn relative to valve member 10 and, after roughly 30°, the openings 14 of hub 3 will no longer coincide with opening 11 of valve member 10, so that the latter is closed. After a time the cam 24 of hub 3 runs against the other side of cam 21 of valve member 10 and the valve member 10 will begin to co-rotate with hub 3 round shaft end 4 and intermediate disc 15 will begin to slip and the valve member remains closed.

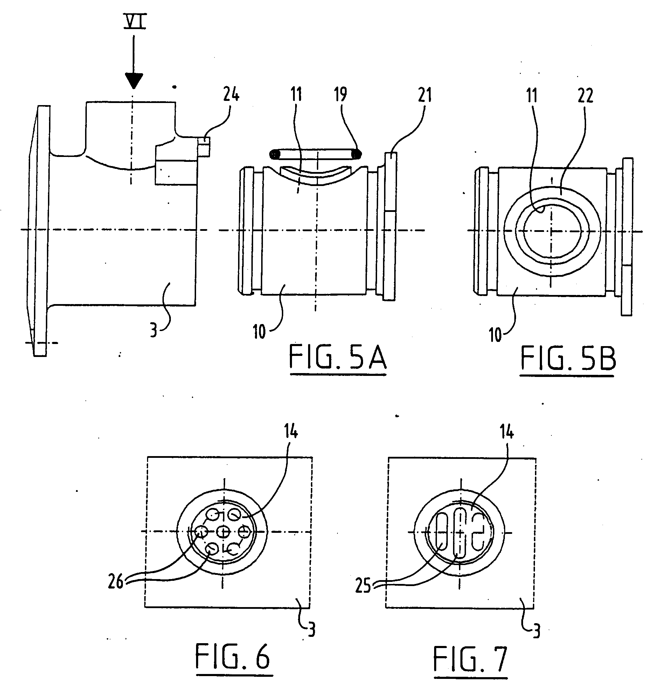

As shown in fig. 5, the valve member 10 is provided with a radial opening 11 which is sealed by a special seal groove 22 in which sealing ring 19 is arranged. As shown in fig. 6, in order to hold sealing ring 19 in place when it passes the opening 14, this latter is formed by a number of holes 26 such that wall-like parts remain which hold the sealing ring 19 pressed in, also in the case of strong water flows. Fig. 7 shows a preferred embodiment wherein slot-like holes 25 are applied. Here also the remaining wall parts enclose the sealing ring 19.

## Claims

1. Hose reel comprising a fixedly disposed shaft end (4), a reel hub (3) which is mounted rotatably round the shaft end (4) and which is provided with co-rotatable hose connecting means (23), wherein a water supply channel is defined which extends internally through the shaft end (4) and communicates with the hose connecting means through radial openings in the shaft end and the reel hub, and wherein the reel hub (3) is provided with a co-rotatable valve case (10) which lies directly round the shaft end (4) and which is rotatable through an angle relative to the reel hub (3) between a closed position, in which the radial opening therein is blocked, and an open position in which it is left open, **characterized in that** the valve case (10) is rotatably arranged on the shaft end (4) and the reel hub (3) is rotatably arranged on the valve case (10) and that a friction coupling is arranged, engaging the valve case and rotating this in the open position and vice versa at rotation of the reel hub, and in that the friction coupling engages the shaft end (4) and the valve case (10).

2. Hose reel as claimed in claim 1, wherein the friction coupling comprises a disc (16) which is fixedly connected to an end face of the shaft end (4) and which lies, via a layer (15) of friction material, with a bias against an annular axial face of the valve case (10).

3. Hose reel as claimed in claim 2, wherein the disc (16) is connected to the shaft end (4) by an axial bolt connection.

4. Hose reel as claimed in claim 2 or 3, wherein the annular axial face of the valve case (10) bears a radial cam (24) which co-acts with a protrusion on the reel hub (3) to define the rotational positions of the valve case (10) corresponding with the open and closed position.

5. Hose reel as claimed in any of the foregoing claims, wherein the valve case (10) comprises a radial opening (11) which in the open position coincides with the radial opening (14) in the reel hub (3), and in the mutually facing cylindrical surfaces of the valve case (10) and the reel hub (3) a groove is formed running round one of these openings, in which groove an O-ring (19) is arranged, and the other opening (14) is formed from a number of smaller openings (25, 26) with wall parts remaining therebetween.

6. Hose reel as claimed in claim 5, wherein the smaller openings are elongate openings (25) in tangential direction.

## Patentansprüche

1. Schlauchhaspel mit einem fest angeordneten Schaftende (4), einer Haspelnabe (3), die drehbar an das Schaftende (4) montiert ist und die mit sich mitdrehenden Schlauchanschlußmitteln (23) versehen ist, in welchen ein Wasserzuführkanal definiert ist, der sich im Inneren durch das Schaftende (4) erstreckt und über radiale Öffnungen in dem Schaftende und der Haspelnabe mit den Schlauchanschlußmitteln in Verbindung steht, und wobei die Haspelnabe (3) mit einem sich mitdrehenden Ventilgehäuse (10) versehen ist, das direkt um das Schaftende (4) liegt und um einen Winkel relativ zur Haspelnabe (3) zwischen einer geschlossenen Position, in der die sich darin befindliche radiale Öffnung blockiert ist, und einer offenen Position, in der sie offengelassen ist, drehbar ist,
dadurch **gekennzeichnet,** daß das Ventilgehäuse (10) drehbar auf dem Schaftende (4) angeordnet ist und die Haspelnabe (3) drehbar auf dem Ventilgehäuse (10) angeordnet ist und daß eine Reibungskupplung vorgesehen ist, die bei Rotation der Haspelnabe in das Ventilgehäuse eingreift und dieses in die offene Position dreht und umgekehrt, und daß die Reibungskupplung in das Schaftende (4) und das Kupplungsgehäuse (10) eingreift.

2. Schlauchhaspel nach Anspruch 1,
wobei die Reibungskupplung eine Scheibe (16) aufweist, die fest an der Endfläche des Schaftendes (4) befestigt ist und die über eine Schicht (15) aus Reibungsmaterial mit Vorspannung an einer ringförmigen Axialfläche des Ventilgehäuses (10) anliegt.

3. Schlauchhaspel nach Anspruch 2,
wobei die Scheibe (16) mit dem Schaftende (4) mittels einer Axialbolzenverbindung verbunden ist.

4. Schlauchhaspel nach Anspruch 2 oder 3,
wobei die ringförmige Axialfläche des Ventilgehäuses (10) einen Radialnocken (24) aufweist, der mit einem Vorsprung an der Haspelnabe (3) zusammenwirkt, um die Rotationspositionen des Ventilgehäuses (10) entsprechend der offenen und geschlossenen Position zu definieren.

5. Schlauchhaspel nach einem der vorstehenden Ansprüche,
wobei das Ventilgehäuse (10) eine radiale Öffnung (11) hat, die in der offenen Position mit der radialen Öffnung (14) in der Haspelnabe (3) übereinstimmt, und in den einander zugewandten zylindrischen Flächen des Ventilgehäuses (10) und der Haspelnabe (3) eine Nut ausgebildet ist, die um diese Öffnungen herum verläuft, in welcher ein O-Ring (19) angeordnet ist, und die andere Öffnung (14) aus einer Anzahl kleinerer Öffnungen (25, 26) mit dazwischen verbliebenen Wandteilen gebildet ist.

6. Schlauchkupplung nach Anspruch 5,
wobei die kleineren Öffnungen langgestreckte Öffnungen (25) in tangentialer Richtung sind.

## Revendications

1. Dévidoir pour tuyau souple comprenant une extrémité d'arbre (4) disposée fixement, un moyeu de dévidoir (3) qui est monté en rotation autour de l'extrémité d'arbre (4) et qui est pourvu d'un moyen de raccordement de tuyau souple (23) pouvant tourner en coopération avec lui, un canal d'alimentation en eau étant défini, qui s'étend à l'intérieur de l'extrémité d'arbre (4) et qui communique avec le moyen de raccordement de tuyau souple par l'intermédiaire d'ouvertures radiales aménagées dans l'extrémité d'arbre et dans le moyeu de dévidoir, et le moyeu de dévidoir (3) étant pourvu d'un carter de robinet (10) pouvant tourner en coopération avec lui, qui repose directement autour de l'extrémité d'arbre (4) et qui peut tourner d'un certain angle par rapport au moyeu de dévidoir (3), entre une position fermée, dans laquelle l'ouverture radiale qui y est aménagée est obturée, et une position ouverte, dans laquelle elle est laissée ouverte, caractérisé en ce que le carter de robinet (10) est monté en rotation sur l'extrémité d'arbre (4) et le moyeu de dévidoir (3) est monté en rotation sur le carter de robinet (10), en ce qu'il est prévu un accouplement par friction, entrant en prise avec le carter de robinet et le faisant tourner dans la position ouverte et vice versa lors de la rotation du moyeu de dévidoir, et en ce que l'accouplement par friction met l'extrémité de l'arbre (4) en prise avec le carter de robinet (10).

2. Dévidoir pour tuyau souple selon la revendication 1, dans lequel l'accouplement par friction comprend un disque (16) qui est raccordé en liaison rigide à une surface d'extrémité de l'extrémité d'arbre (4) et qui repose, sous contrainte, contre une surface axiale annulaire du carter de robinet (10), par l'intermédiaire d'une couche (15) de matériau de friction.

3. Dévidoir pour tuyau souple selon la revendication 2, dans lequel le disque (16) est raccordé à l'extrémité d'arbre (4) par une liaison axiale à boulon.

4. Dévidoir pour tuyau souple selon la revendication 2 ou 3, dans lequel la surface axiale annulaire du carter de robinet (10) s'appuie sur une came radiale (24), qui coopère avec une saillie aménagée sur le moyeu de dévidoir (3) pour définir les positions de rotation du carter de robinet (10) correspondant à la position ouverte et à la position fermée.

5. Dévidoir pour tuyau souple selon l'une quelconque des revendications précédentes, dans lequel le carter de robinet (10) comprend une ouverture radiale (11) qui, dans la position ouverte, coïncide avec l'ouverture radiale (14) aménagée dans le moyeu de dévidoir (3), et, dans les surfaces cylindriques respectives en regard l'une de l'autre du carter de robinet (10) et du moyeu de dévidoir (3) est aménagée une gorge s'étendant autour de l'une de ces ouvertures, gorge dans laquelle est prévu un joint torique (19), et l'autre ouverture (14) est constituée d'un certain nombre de petites ouvertures (25, 26) entre lesquelles restent des parties de paroi.

6. Dévidoir pour tuyau souple selon la revendication 5, dans lequel les petites ouvertures sont des ouvertures (25) allongées dans la direction tangentielle.
